**Europäisches Patentamt**

(19) **European Patent Office**

**Office européen des brevets**

(11) Publication number : **0 406 345 B1**

(12) # EUROPEAN PATENT SPECIFICATION

(45) Date of publication of patent specification :
**20.10.93 Bulletin 93/42**

(51) Int. Cl.⁵ : **B29C 65/44,** B29C 65/46,
// B29K27:18, B29K27:12

(21) Application number : **89911195.9**

(22) Date of filing : **27.09.89**

(86) International application number :
**PCT/US89/04213**

(87) International publication number :
**WO 90/04511 03.05.90 Gazette 90/10**

(54) **METHOD AND APPARATUS FOR BONDING POLYTETRAFLUOROETHYLENE TO A METAL SUBSTRATE AND ARTICLES THEREBY PRODUCED.**

(30) Priority : **18.10.88 US 259068**

(43) Date of publication of application :
**09.01.91 Bulletin 91/02**

(45) Publication of the grant of the patent :
**20.10.93 Bulletin 93/42**

(84) Designated Contracting States :
**DE FR GB IT**

(56) References cited :
**DE-A- 2 521 734
DE-A- 3 441 988
FR-A-14 956 66
US-A-37 496 21
Patent Abstracts of Japan - vol. 4, no. 125
(M-30)(607) 03 September 1980**

(73) Proprietor : **MATHER SEAL COMPANY
525 Redman
Milan, MI 48160 (US)**

(72) Inventor : **DUNCAN, Eugene, A.
833 Lambkins
Saline, MI 48176 (US)**

(74) Representative : **Archer, Philip Bruce et al
Urquhart-Dykes & Lord European Patent
Attorneys New Priestgate House 57 Priestgate
Peterborough Cambridgeshire PE1 1JX (GB)**

**Description**

METHOD AND APPARATUS FOR BONDING POLYTETRAFLUOROETHYLENE TO A SUBSTRATE AND ARTICLES THEREBY PRODUCED

This invention relates generally to a method and apparatus for bonding polytetrafluoroethylene (PTFE) to a substrate. An intermediary layer, preferably fluorinated ethylene propylene (FEP), is completely melted while the PTFE is partially melted to form a strong mechanical bond between the PTFE and the substrate.

Prior attempts to bond PTFE to metal have met with varying degrees of success. For example, U.S. Patent 3,462,333 to McCormick disclcses a method of banding a PTFE wafer to a metal casing using an intermediary bonding layer of FEP. Although a bond may be formed using this method, the physical properties of the PTFE are altered so as to render the PTFE unsuitable for certain applications. More particularly, the entire PTFE element in McCormick is subjected to high temperatures which are sustained over a period of time sufficient to melt and resinter the entire PTFE element and thereby after its internal physical structure, particularly its crystallinity.

US 3,749,621 discloses a method of forming a tubular PTFE sleeve about a cylindrical substrate by interposing an FEP layer between the sleeve and substrate and induction heating. While this method may also form a bond, the pressure used to form the bond between the PFTE sleeve and a steel roller is generated by stress relieving the PTFE sleeve with a thermally derived or enhanced interface pressure. This document also teaches that the entire sleeve is thermally expanded and contracted, and emphasizes the advantageous use of the dimensional change occurring when the PTFE or FEP are heated to melting temperature.

When PTFE is heated to its gel or melting temperature of approximately 327°C (621°F), its crystallinity begins to decrease. When this occurs, the physical properties of the PTFE begin to change. The lower the crystallinity of a PTFE element, the greater is its elastic memory. With increased elastic memory, a sintered PTFE element will return to its unstressed form more quickly and with greater force. Thus, as the crystallinity of the PTFE decreases, so does its dimensional stability as the PTFE gradually and unpredictably returns to its unstressed condition. This poses a significant problem in sealing applications where a PTFE sealing element must be accurately dimensioned to form a secure seal against a coacting member such as a shaft, housing, bore or the like.

Another problem associated with prolonged or excessive heating of a PTFE element is the loss of certain physical properties which may have been optimized during its initial production. That is, not only may cyrstallinity be optimized during the initial sintering of a PTFE element, but so may wear resistance. If a sintered PTFE element is held at temperatures at or near its gel temperature for any period of time, it is resintered and begins to experience molecular degradation wherein long molecules of PTFE are broken to form shorter molecules. Ideally, PTFE should be sintered only once in order to preserve its strength and wear resistance.

The shorter molecules formed during molecular degradation increase the crystallinity of the PTFE element. This results in a loss of resilience as well as a loss in wear resistance. Molecular degradation begins as soon as PTFE reaches its gel temperature. The greater the temperature of the PTFE above its gel temperature, the quicker is the rate and the greater is the degree of molecular degradation.

Thermal expansion poses another problem when heating and melting PTFE. Thermal expansion can increase the volume of a PTFE element up to about 20%. If a PTFE element is not constrained during heating, it will expand in a generally unpredictable manner and upon cooling and contraction will typically lose any carefully controlled dimensions formed previously. This is particularly troublesome if the PTFE element is used as a sealing lip which must maintain accurately controlled contact with a coacting sealing surface.

If the PTFE element is constrained in a mold or the like during heating, internal stresses will develop within the element.

These stresses can, over time, produce dimensional changes in the element resulting in a corresponding loss of precision tolerances. On the other hand, if the PTFE element is not constrained during heating, all precision dimensions will likely be lost immediately. For example, a previously sintered PTFE element which has been machined to tolerances of ± 0.127mm (±.005 inch) can easily deform during heating so as to produce post-heated tolerances of ± .508mm (± .020 inch).

A sintered PTFE element is, in effect, stress relieved during further heating and sintering and returns to a form which approximates its stress-free configuration. In the case of a PTFE element which has been precision machined for use as a radial lip sealing member, the loss of precision dimensions upon heating can result in unpredictable loading and wear between the PTFE sealing member and a rotating shaft or the like. Moreover, the contact pattern between the sealing member and shaft will likewise become unpredictable. In each case, poor sealing performance can be expected in the form of seal leakage or premature seal wear and premature seal failure.

Prior attempts to melt and bond PTFE to a metal substrate under heat and pressure have resulted in a dilemma that has heretofore remained unresolved. That is, the use of high melting temperatures for short periods of time has resulted in molecular degradation, while the use of lower melting temperatures (at or slightly above the gel temperature) for longer periods of time has also resulted in molecular degradation. In each case, by heating a PTFE element to a given temperature for a sufficient period of time to form a satisfactory bond, a loss of desirable physical properties has resulted.

When a PTFE element is heated at or slightly above its gel temperature, it takes a relatively long period of time for the entire element to gel. This is due to the low thermal conductivity of PTFE which reduces or slows the rate of heat transfer therethrough. If one attempts to avoid molecular degradation of a PTFE element by heating the element at or near its gel temperature, (as opposed to higher temperatures) it will take so long to completely melt or gel the entire element that the PTFE material which is initially gelled will remain gelled for so long that it will experience molecular degradation by the time the least of the PTFE material reaches its gel state. However, if one attempts to increase the rate of heat transfer by using higher melting temperatures and thus reduce the time the PTFE is in its gel state, the rate of molecular degradatiuon has heretofore increased to unacceptable levels thereby causing a significant lose of physical properties.

Accordingly, a need exists for a method and apparatus for bonding PTFE to a substrate while minimizing molecular degradation and maximizing the dimensional stability of a PTFE element. A need also exists for a method and apparatus which reduces PTFE bonding time and increases production efficiency.

The present invention has been developed to fulfill one or more of the needs noted above ; and/or to provide a method and apparatus for bonding a PTFE element to a substrate while maintaining the desired physical properties and dimensions of the PTFE element; and/or to provide a method and apparatus which reduces the time required to bond a PTFE element to a substrate and/or reduces the energy requirements and tooling costs for carrying out the bonding process.

According to the invention there is provided a method and a seal as defined in the accompanying claims.

A preferred embodiment of the present invention uses induction heating to rapidly heat a limited region of a PTFE element to its gel state via conduction heat transfer through a metal substrate. A layer of fluorinated ethylene propylene (FEP) is placed between the metal substrate and PTFE element to form a mechanical bond with both the metal and PTFE. Because induction heating results in an extremely fast temperature rise in the PTFE element, there is little opportunity for significant molecular degradation to occur, even at relatively high bonding temperatures.

A particularly important aspect of the embodiment is the partial melting or gelling of the PTFE element within a limited region over which bonding takes place. Preferably, only a small portion of the PTFE element is gelled or further sintered while the remainder is preserved in its original sintered state. This provides for excellent dimensional stability and maintains the predetermined optimal physical properties of the original PTFE material.

Another important aspect of the embodiment is the predictability of the bond formed according to the invention. While prior bonding attempts have generally met with arratic results, the present invention provides reliable, consistent, repeatable and controllable results in an economical manner.

BRIEF DESCRIPTION OF THE DRAWINGS

In the accompanying drawings of a preferred embodiment:-
Figure 1 is a schematic plan sectional view through a tooling setup used for producing a PTFE to metal bond;
Figure 1a is a schematic fragmental view of an induction coil showing an oil seal casing in phantem;
Figure 2 is perspective view of a radial lip oil seal manufactured with the setup of Figure 1;
Figure 3 is a schematic diagram of a closed loop feedback control circuit for controlling bonding temperature;
Figure 4 is a schematic diagram of an induction heating unit used to power the induction coil of Figure 1;
Figure 5 is a sectional view through a central portion of a metal seal casing;
Figure 6 is a schematic partially sectioned view showing the application of a layer of FEP to a metal seal casing;
Figure 7 is a central sectional view showing the placement of a PTFE element on the casing of Figure 6;
Figure 8 is a sectional view showing the alignment of the assembly of Figure 7 upon an induction coil and the localized bonding between the PTFE element and metal casing after induction heating;
Figure 9 is a graph of bonding pressure as a function of time;
Figure 10 is a graph of bonding temperature as a function of time;
Figure 11 is an enlarged fragmental sectional view of a seal formed according to the invention;

Figure 12 is a plan sectional view through a wheel hub, showing a wheel axle in phantom; and
Figure 13 is a view of Figure 12 showing a typical seal replacement or repair procedure.

## DETAILED DESCRIPTION OF THE PREFERRED EMBODIMENTS

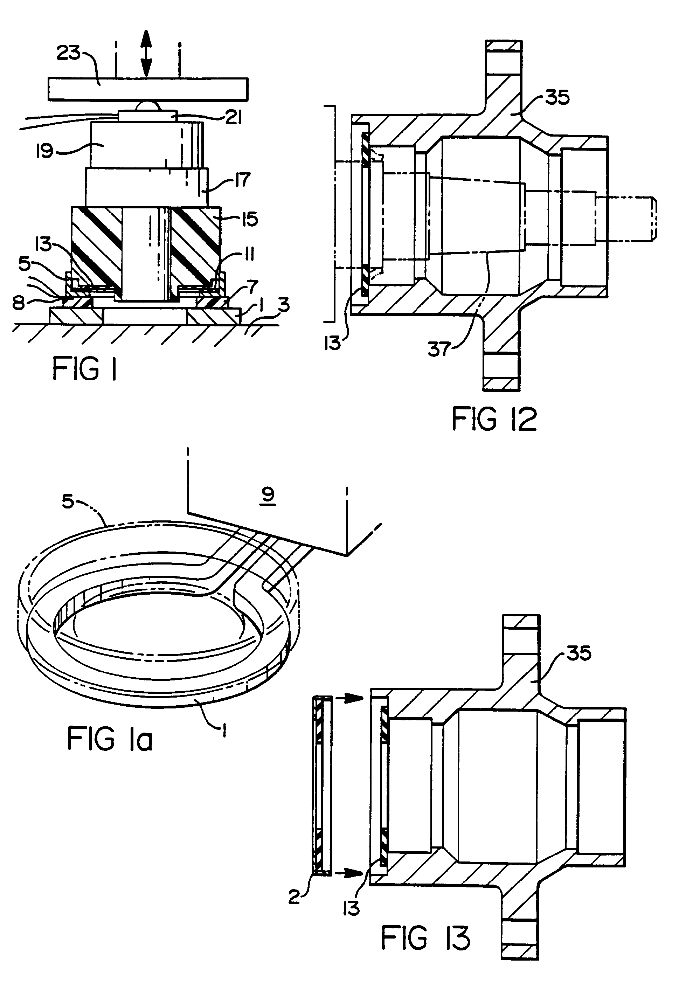

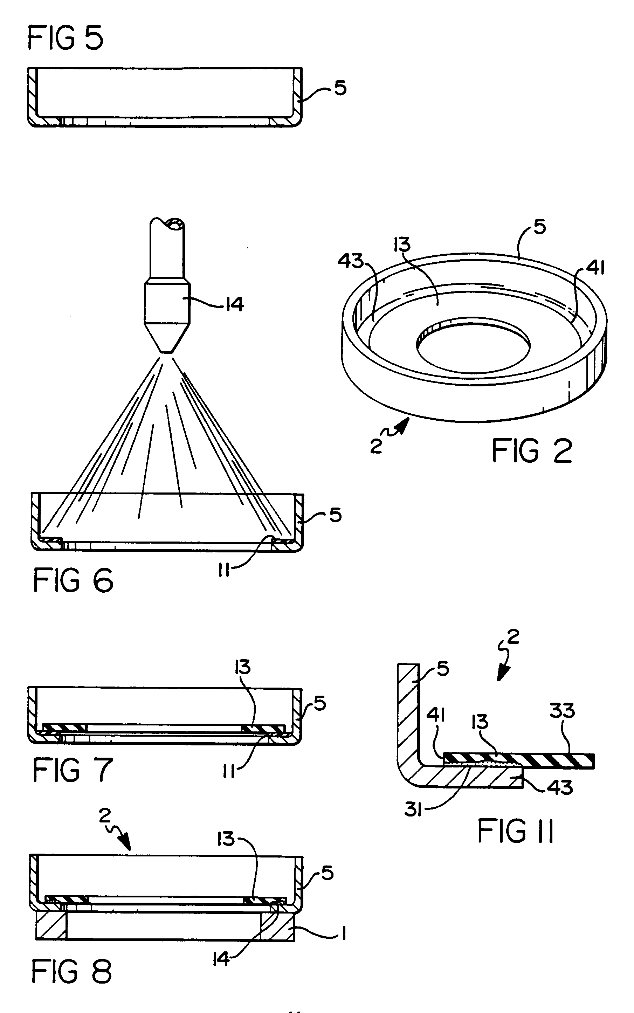

The present invention will now be described in conjunction with Figure 1 which depicts a tooling setup used to bond a PTFE wafer to a metal case to form a radial lip oil seal 2 such as shown in Figure 2. While the invention will be discussed in terms of oil seal production, it should be emphasized that the invention is applicable to bonding any form of PTFE element to any type of metal substrate which may be induction heated. The term polytetrafluorethylene (PTFE) as used herein is understood to include pure PTFE, filled PTFE and modified polymers of PTFE. Although various process parameters may require modification to suit a particular application, the basic process steps and apparatus will generally remain the same as discussed below.

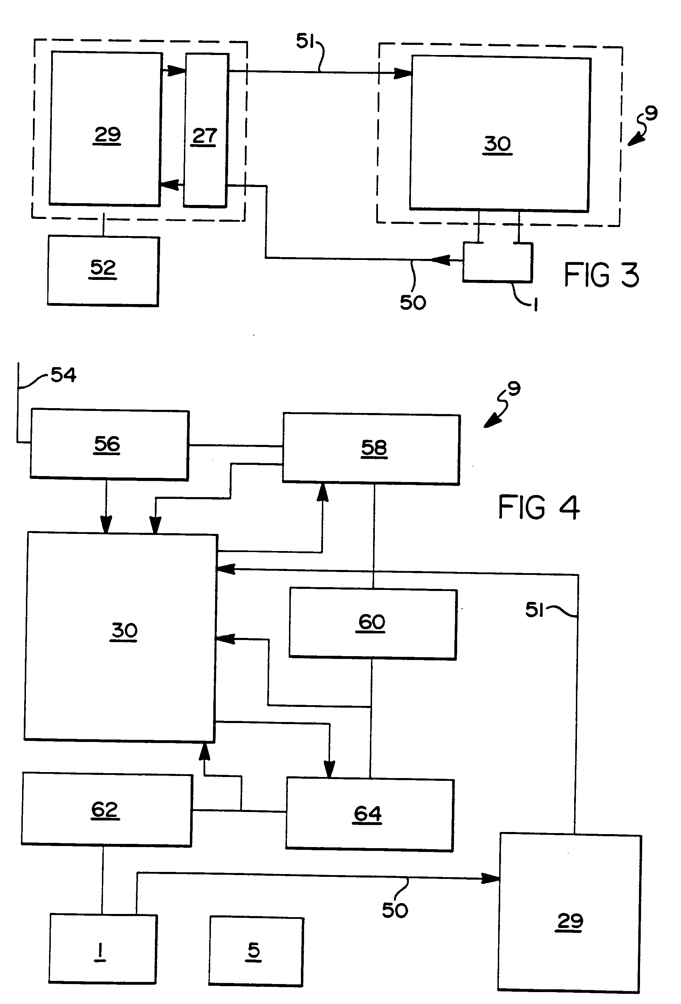

As seen in Figure 1, a single loop induction coil 1 is mounted on a support base 3 for induction heating a metal member such as annular ferromagnetic seal casing 5. The seal casing 5 is insulated from and spaced from the induction coil 1 via PTFE spacer ring 7. A temperature sensor such as thermocouple 8 is preferably placed between the coil 1 and the casing 5 to provide a signal for controlling the power delivered to the induction coil 1, as represented by the control schematic in Figure 3.

The induction coil 1 as seen in Figure 1(a) is powered by an induction unit 9 of the type schematically outlined in Figure 4. Induction unit 9 is available from the American Induction Heating Corporation of Detroit, Michigan. The unit employs an Enercon Industries Corporation Type EC Parallel Resonant Current Source Converter capable of delivering 10KW of power at 10KHz frequency. The Enercon Solid State Power Supply is a frequency converter which uses static switching techniques to change three-phase line frequency input power into a single phase output at the required frequency. The power supply circuit uses a thyristor to rapidly switch high power levels when triggered by low level control signals.

The frequency of oscillation and power output of the induction unit 9 are controlled by a microprocessor circuit which receives signals from various electronic circuitry and sensors such as thermocouple 8. The 10KW/10KHz chopper type power supply is known informally as a "screamer" due to the audible frequencies produced during its operation. A bank of six capacitors form an adjustable tank capacitance. The output transformer is a single turn secondary (to which coil 1 is coupled), water cooled type with adjustable primary turns set at seventeen for a 17:1 ratio.

The size, shape and number of turns of the induction coil 1 will vary based on the geometry of the metal member or seal casing 5 being heated. The size and shape of the spacer 7 will also vary due to the sensitivity of the relative position of the seal casing and the field produced by the coil. In order to obtain an effective bond between the PTFE element and the casing 5, it is preferred to interpose a layer 11 of a bonding agent such as a fluorinated resin having a melting point lower than PTFE between the PTFE element 13 and the casing 5. Such fluorinated resin may include fluorocarbons such as fluorinated ethylene propylene (FEP) which is a copolymer of tetrafluoroethylene and hexafluoropropylene. Perfluoroalkoxy resins may also be used as a bonding agent.

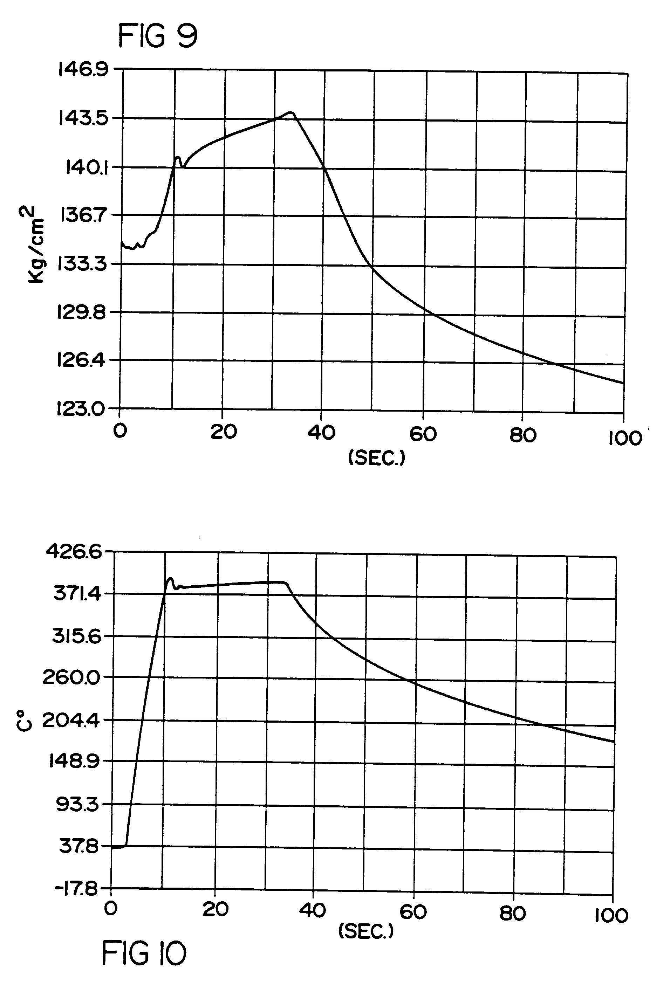

In a particularly preferred embodiment, FEP powder having a particle size of 0.1-3 microns may be applied to the casing 5 (Figure 5) in a solvent or carrier dispersion using standard air-operated spray painting equipment 12 as shown in Figure 6. The PTFE element 13 may then be centered over the casing 5 as seen in Figure 7. The FEP-coated casing 5 and PTFE element 13 may then be centered over the induction coil 1 as seen in Figures 1 and 8, and heated to form an annular bond 14.

For ordinary 5% glass, 5% molybdenum disulfide filled PTFE seal elements, a satisfactory dispersion for spraying the FEP was found to contain about 50% by volume of isopropyl alcohol (reagent grade, low residue) with the remainder containing dimethyl formamide, ethylene glycol and water. About 200 grams of FEP powder are added to one liter of this solvent solution. However, any solvent may be used which wets the PTFE and then dries, such as 100% methyl ethyl ketone (MEK) or 100% isopropyl alcohol.

For the production of oil seals, it has been found desirable to spray a relatively thick coating of FEP on the casing, with a final dried thickness of .025 - .050mm (1 or 2 mils). The FEP film layer 11 should be dry prior to bonding. Although a dry film coating of FEP is presently used, any method of FEP application could be employed including a hot melt application of FEP, a thin sheet of FEP or a FEP coating applied by dipping. Of course, other bonding agents or mixtures thereof could be applied in a similar manner.

Due to the high temperatures required for this type of bonding process, surface contamination of the metal casing does not pose a major problem. Although no surface preparation of the metal casing is required, improved bond strengths can be achieved by cleaning and grit blasting as suggested in Table 1. Various metal preparations are listed in Table 1, with corresponding peel strengths identified. Peel strength relates to the force required to peel a 2.54cm (one inch) wide PTFE strip from a metal substrate after bonding.

TABLE 1

| Metal Preparation | Peel Strength | Remarks |
|---|---|---|
| As received from stamper, with no cleaning of any kind. | 4.33 – 14.7 kg/cm (5 – 17 lb/in) | Heavy smoke and carburized residue during heat cycle |
| As received from stamper, rinsed in MEK – 12 seal casings/liter max. | 13 – 16.5 kg/cm (15 – 19 lb/in) | No smoke, consistent and uniform bond all around |
| As received from stamper, rinsed in MEK then rinsed in Isopropyl alcohol, oven dried | 13 – 16.5 kg/cm (15 – 19 lb/in) | Same as above |
| Grit blasted (silica), no further cleaning | 19 – 22.3 kg/cm (22 – 28 lb/in) | Light smoke and carburized residue during heat cycle |
| Grit blasted (silica), rinsed in MEK followed by Isopropyl alcohol | 22.3 – 27.7 kg/cm (28 – 32 lb/in) | PTFE element tearing (rather than bond failing) in all pulls, light discoloration |
| Grit blasted (silica), ultrasonic clean (water emulsification), distilled rinse, oven dry | 29.5 – 32.9 kg/cm (34 – 38 lb/in) | PTFE element tearing (rather than bond water failing) in all pulls, portions of element surface ripped out and remained on metal surface during extended pull |

Referring again to Figure 1, it is seen that the FEP coated seal casing 5 may be first placed on the spacer ring 7 and the PTFE element 13 subsequently aligned over the FEP coating 11. Any type of filled or unfilled PTFE material may be used according to the invention for bonding to the metal casing. However, 15% glass filled PTFE material is preferred for the spacer ring 7 and the PTFE pressure plug 15 which centers the PTFE element 13 on the metal seal casing 5.

The PTFE pressure plug 15 not only provides thermal insulation to concentrate the induction heating within the metal casing 5, but plug 15 also provides a somewhat resilient surface to promote uniform pressure distribution between the PTFE element 15 and the metal seal casing 5. It is of course possible to form the spacer ring 7 and pressure plug 15 from ceramic or other non-ferromagnetic materials.

Due to the magnetic field produced by the induction coil 1, and due to the thin cross-section of the PTFE material of element 13, metallic tooling can not be considered practical for this particular seal application. As discussed further below, only one side of the PTFE element is melted or gelled. If metallic tooling such as aluminum were used, it would act as a heat sink, thereby extending the time and energy required to produce the bond and thereby promoting molecular degradation.

A resilient polyurethane spacer disk 17 may be placed over the pressure plug 15 to further compensate for any possible non-planar contact or non-parallel alignment between the various tooling components. A particular advantage of the polyurethane spacer disk is its ability to maintain a substantially constant applied load on the PTFE element 13 and casing 5, notwithstanding any axially directed thermal expansion of the PTFE tooling components and PTFE element during induction heating.

A load cell support disk 19 may be located on top of the polyurethane spacer disk and a load cell 21 may be placed on top of the disk 19 to monitor bonding pressures. A hydraulic ram 23 is positioned over the entire stacked set up. For a seal casing and PTFE element having a mutual contact surface area of $5.06 cm^2 (0.785 in^2)$, a contact pressure within the range of $68.2 - 153.4 kg/cm^2$ (200 - 450 psi) was found acceptable for producing consistently strong and reliable bonds.

The upper bonding pressure limit is established by the particular time/temperature profile to which the PTFE element is exposed. As the PTFE element absorbs heat it begins to soften. The softened PTFE can then undergo deformation in the form of "cold flow" under excessive ram pressure. This can result in catastrophic material failure where the PTFE element 13 is either completely sheared off along the inner diameter of the seal casing 5, or is fractured in planar shear along the PTFE/metal interface.

Various contact loads applied by the ram 23 and corresponding peel strengths are listed in Table 2:

## TABLE 2

| Seal # | Contact Load | Pressure | Peel Strength |
|---|---|---|---|
| 1 - 2 | 45.4 kg (100 lbs.) | $43.3 kg/cm^2$ (127 psi) | $26.8 - 26.8 kg/cm$ (31 - 31 lb/in) |
| 3 - 4 | 90.9 kg (200 lbs.) | $86.6 kg/cm^2$ (254 psi) | $29.4 - 31.2 kg/cm$ (34 - 36 lb/in) |
| 5 - 6 | 136.4 kg (300 lbs.) | $130.6 kg/cm_2$ (382 psi) | $29.4 - 31.2 kg/cm$ (34 - 36 lb/in) |
| 7 - 8 | 181.8 kg (400 lbs.) | $173.6 kg/cm^2$ (509 psi) | $25.1 - 29.4 kg/cm$ (29 - 34 lb/in) |
| 9 | 227.3 kg (500 lbs.) | $216.9 kg/cm^2$ (636 psi) | sheared off sheared off |

It should be noted that the peel strengths for seals #5 through #8 reflect the PTFE element ripping rather than failure of the PTFE/FEP/metal bond.

Typical pressure and temperature bonding cycles are respectively shown in Figures 9 and 10 for seals 5 and 6 of Table 2. A 30 second overall bonding cycle time was used for all of the seals identified in Table 2. Seals 5 and 6 were found to exhibit particularly good bonds. The PTFE elements were made from 5% glass, 5% moly filled PTFE material cut to a thickness of .635mm (.025 inch).

The cycle time and temperature profile represented in Figure 10 is controlled with a closed loop temperature feedback system schematically depicted in Figures 3 and 4. Although it is possible to produce a satisfactory PTFE to metal bond using only the power level controls and timers typically available on the induction unit 9, more consistent and reliable bonds can be produced by controlling the power level of the induction unit based on the actual real time temperature of the metal casing 5.

It was found that minor variations in the initial (room) temperature of the metal casing 5 would result in significant variations in its final temperature if the induction unit 9 was set at a given power duty cycle over corresponding predetermined time intervals. For example, with fixed power cycles, a 2.8°C (5°F) increase in the ambient temperature of the seal casing could result in a 55.5°C (100°F) increase in the maximum temperature of the PTFE element during bonding. As indicated earlier, excessive temperatures above the gel temperature promote rapid molecular degradation.

Thus, in order to minimize and control molecular degradation of both the PTFE and the bonding agent, the power level of the induction unit 9 is preferably controlled directly from a temperature signal 50 (Figure 3) provided by thermocouple 8 in direct contact with the metal case element 5. The signal 50 from thermocouple 8 is fed to a signal conditioning input/output module 27 (Figures 3 and 4) which scales the signal to an acceptable value for input into computer 29. Computer 29 may take the form of a PC/AT or the like and may be programmed to generate a control signal 51 using commercially available software 52.

As further seen in Figure 4, line power 54 is provided to input power transformer 56. A converter gating circuit 58 is controlled by control computer 30 which controls the discharge of tank capacitors 60. An output transformer 62 is associated with coil 1 and a half-wave rectifier circuit 64.

The software used for controlling the induction unit to produce the time-temperature curve in Figure 10 was a commercially available Labtech Notebook Proportional - Integral - Derivative (PID) algorythm. However, any other control program may be adapted to produce acceptable results. Based on the value of the input signal from the thermocouple 8, computer 29 will produce a control signal for input into the control computer 30 which controls the power output of the induction unit 9.

As further seen in Figure 10, the temperature of the metal casing 5 is initially raised from room temperature (about 37.7°C or 100°F) to about 382.2°C (720°)F in about six seconds. The induction unit 9 is programmed to produce full or maximum output power until thermocouple 8 produces a control signal indicating that the temperature of the metal casing has reached about 371.1°C (700°F). At this point, computer 29 feeds a signal to computer 30 to cut the power to the induction unit to about 0% power.

As further seen in Figure 10, an overshoot of about 16.6°C (30°F) occurs, followed by an approximate 11.1°C (20°F) drop during a brief power off cycle. Once the temperature of the metal case returns to a desired bonding temperature (about 376.6°C or 710°F), the power is increased to about 30 - 40% of maximum output to maintain the casing 5 at this temperature. After a bonding period of about 20 seconds at about 376.6°C (710°F), the power is cut off completely to allow the case and PTFE element to cool, preferably under pressure and until the case 5 reaches a temperature of 149°C (300°F) or less.

It is desirable to reduce or cut off the power anywhere from about 5.5°C (10°F) to 22.2°C (40°F) below the desired bonding temperature in order to allow for the temperature overshoot. At temperatures above 371.1°C (700°F), significant molecular degradation can take place in the FEP in a matter of a few seconds. Thus, a short bonding time is essential for a strong reliable bond.

It is advantageous to raise the temperature of the metal case as quickly as possible from room temperature to the melting temperature of PTFE, (327°C or 621°F) or above, in order to achieve the most rapid melting of the PTFE as possible. The heating of the PTFE to its melting point should take place as rapidly as possible, i.e. in less than 60 seconds and preferably in less than 10 seconds. In order to minimize molecular degradation of the PTFE material and the bonding agent (FEP), the metal case must be heated to a temperature of about 27.7°C (50°F) to 50°C (90°F) above the melting temperature of PTFE in order to achieve a rapid rate of heat transfer from the metal case to the PTFE element. However, it has been found that for certain applications, acceptable rates of heat transfer can be obtained by heating the metal case member to a temperature between 327°C (621°F) and 426.6°C (800°F).

Specifically, it has been found that molecular degradation can be minimized by heating the metal case to a temperature between 360°C (680°F) to about 393.3°C (740°F) and preferably between 365.5°C (690°F) and 376.6°C (710°F). After the metal case has been rapidly heated to a suitable temperature above the melting or gel temperature of PTFE, such as the 382.2°C (720°F) temperature shown in Figure 10, it has been found that a strong bond between the PTFE and metal may be formed within a period of about 10 seconds up to 60 seconds. It is preferable to maintain the PTFE in its gel state for as short a time as possible i.e. less than 60 seconds, and preferably within 15 to 30 seconds.

Although molecular degradation is a primary consideration in minimizing the time and temperature of the PTFE in its gel state, the same considerations apply to the bonding agent such as FEP which has a lower melting temperature than PTFE. If the FEP experiences excessive molecular degradation the bond will fail, and in extreme cases the FEP will turn into powder. Moreover, this time-temperature relationship is also of importance in controlling the dimensions of the final bonded product. That is, as the temperature of the PTFE element is increased, it begins to soften. The higher the bonding temperature is maintained above the gel temperature of PTFE, and the longer this temperature is maintained, the softer the PTFE becomes.

Since the PTFE element is clamped to the FEP coated metal case throughout the bonding process, the clamping or bonding pressure applied by the ram (such as represented in Figure 9) can cause uncontrolled flow of the PTFE if it is excessively softened. This can result in defective bonds and/or loss of dimensional control of the PTFE element. Although a substantially constant bonding pressure is applied by ram or press 23, the bonding pressure will vary due to the thermal expansion of the tooling and parts being bonded. A relatively uniform bonding pressure is desirable.

A major aspect of the present invention is directed to the avoidance of excessive softening of the PTFE element and the drawbacks which accompany such material softening. This is achieved by controlling and limiting the application of bonding temperatures to a specific region of the PTFE element. More particularly as shown in Figures 8 and 11, only one face of the radial outer portion of the PTFE element contacts the hot metal case so that direct conduction heat transfer is limited to this region. While only one PTFE element is shown, two PTFE elements could be simultaneously bonded to opposite sides of the metal case.

Although heat from the metal case is transferred through the PTFE element, the extent over which the heat is transferred is controlled by the bonding temperature (i.e. the temperature of the metal case) and the time over which the bonding temperature is maintained. Application of the pressures and temperatures according to the cycle times as shown in Figures 9 and 10 to the PTFE element shown in Figures 1 and 8 will result in controlled localized melting of the PTFE element. By limiting the localized melting to a predetermined surface area and to a predtermined depth, the initial or original physical properties of the sintered PTFE element may be preserved and precision tolerances on the PTFE element may be maintained.

As seen in Figure 11, only a thin bond layer 31 of the intermingled FEP and PTFE is melted during bonding. This layer is typically a small fraction of the thickness of the PTFE element being bonded although the entire layer of FEP is preferably melted. In the case of an oil seal having a thickness of .635mm (.025 inch), bond layer 31 may range from about .127 to .254mm (.005 to .010 inch) thick.

What is important to note is that the major portion of the PTFE element 13 remains unaffected by the localized melting. The radially inner portion 33 (Figure 11) of the PTFE element 13 which serves as the contact sealing surface of the seal is virtually unaffected by the induction heating and therefore maintains its original dimensions and wear resistance properties.

As suggested earlier, the invention may be broadly applied to include bonding between any PTFE element and any induction heatable substrate. In fact, any heating means may be used as long as the time and temperature cycles are controlled as discussed above. For example, as seen in Figure 12, an annular PTFE element 13 may be bonded directly to its application site such as wheel hub 35. Wheel hub 35 is typically mounted over an axle or shaft 37 as shown in phantom.

The construction depicted in Figure 12 obviates the use of a seal casing 5, as the element 13, which forms a radial lip oil seal, is directly anchored to the hub 35 with a layer of FEP as described above. An induction field may be applied directly to the hub 35 as pressure is applied to element 13 in any suitable fashion. Should the sealing arrangement of Figure 12 require replacement, the metal cased seal 2 shown in Figures 2 and 13 may be installed in a conventional manner directly over element 13. Alternative sealing applications include induction bonding a PTFE sealing element directly to a housing member such as a transmission housing, engine block, compressor housing, fuel pump housing, crankshaft seal carrier, front engine cover, etc.

The method and apparatus described above provides an efficient means for producing uniform reliable bonds between a PTFE element and a metal or induction heatable substrate. As opposed to prior apparatus which required an entire mold to be heated for melting or bonding material to a PTFE element, the subject invention induction heats only the workpiece. This not only reduces energy requirements for heating, but allows only a portion of the PTFE element to be heated as opposed to prior methods which, by necessity, heated the entire PTFE element within a mold. Thus, the physical properties of the PTFE wafer which were previously dictated by the molding times and mold temperatures are now controlled by the original carefully controlled initial sintering of the PTFE.

Because the bonding cycle time is much shorter using induction heating as compared to prior heating methods, the present invention is particularly well suited to high volume automated production. Moreover, the tooling setup expense required for achieving a given high volume production rate is much lower with the present invention than with conventional mold setups.

As the bond formed according to the present invention is extremely strong, it need not extend over as large a surface area as prior bonds. This allows for savings in the form of reduced PTFE material costs. For example, as seen in Figures 2 and 11, the outer diameter 41 of the PTFE element 13 need not extend over the entire surface of radial flange 43 to form an adequate bond. Thus the diameter of element 13 may be reduced compared to prior designs, thereby reducing the amount of PTFE required to form the seal 2.

Obviously, numerous modifications and variations of the present invention are possible in light of the above teachings. It is therefore to be understood that within the scope of the appended claims, the invention may be practiced otherwise than as specifically described herein.

## Claims

1. A method for bonding a wafer (13) comprising polytetrafluoroethylene to an inductively heatable substrate (5), said wafer having first and second opposed sides separated by a predetermined thickness, and said wafer being formed with predetermined physical properties;

    wherein said method comprises

    interposing a layer of fluorinated resin (11) having a melting point below the melting point of said wafer, between said substrate and at least a portion of said first side of said wafer;

    applying inductively generated heat and external pressure to said wafer (13), to said substrate (5), and to said resin (11), to form a seal and a bond between a limited portion of said first side of said wafer, and said substrate, by rapidly melting said resin and only a portion of said thickness of said wafer adjacent said limited portion of said first side, without melting said second side during formation of said bond, by limiting said heat and external pressure within predetermined ranges, for controlled periods of time, such that said predetermined physical properties of unmelted portions of said wafer are not significantly altered.

2. A method according to claim 1 characterised by said substrate comprising a seal casing (5), and said wafer (13) comprising a contact sealing surface portion projecting from said casing, and said melting being limited to a region separated from said contact sealing surface and located between said casing and said wafer.

3. A method according to claim 1 or claim 2 characterised by said fluorinated resin being a fluorocarbon resin.

4. A method according to claim 3 characterised by said fluorocarbon resin being fluorinated ethylene propylene.

5. A method according to claim 3 characterised by said fluorinated resin being a perfluoroalkoxy resin.

6. A method according to any one of the preceding claims characterised by said substrate (5) being heated to a temperature of at least the melting temperature of polytetrafluoroethylene in less than 10 seconds.

7. A method according to any one of the preceding claims characterised by said substrate being heated to a temperature between 327°C and 427°C (621° and 800°F).

8. A method according to any one of claims 1 to 6 characterised by said substrate (5) being heated to a temperature of about 28 to 50°C (50 to 90°F) above the melting temperature of polytetrafluoroethylene.

9. A method according to any one of claims 1 to 6 characterised by said substrate (5) being heated to a temperature of between 366 and 377°C (690 and 710°F).

10. A method according to claim 8 characterised by said substrate (5) being maintained at said temperature for up to 60 seconds.

11. A method according to claim 10 characterised by said substrate (5) being maintained at said temperature for at least 10 seconds.

12. A method according to claim 11 characterised by said substrate being maintained at said temperature for about 15 to 30 seconds.

13. A seal comprising :

    a wafer (13) having predetermined physical properties and comprising polytetrafluoroethylene, said wafer comprising a contact sealing surface portion and having first and second opposed sides separated by a predetermined thickness; and

    a substrate (5) for supporting said wafer;

    wherein said seal comprises

EP 0 406 345 B1

a bond and seal formed between said first side of said wafer (13) and said substrate (5), said bond comprising a region of fluorinated resin adhesive intermingled with said Polytetrafluoroethylene, said adhesive having a melting point less than the melting point of said wafer, said bond and seal being formed by heating by induction and cooling said substrate and said adhesive and said polytetrafluoroethylene, said bond extending through only a portion of said thickness of said wafer and being separated from said contact sealing surface such that said predetermined physical properties of said wafer at said contact sealing surface are substantially unaffected by formation of said bond.

14. A seal according to claim 13 characterised by said adhesive comprising fluorinated ethylene propylene.

15. A seal according to claim 13 characterised by said adhesive comprising a perfluoroalkoxy resin.

**Patentansprüche**

1. Verfahren zum Verbinden einer Polytetrafluoräthylen umfassenden Scheibe (13) mit einem induktiv erwärmbaren Substrat (5), wobei die Scheibe eine erste und eine zweite Fläche hat, die nach entgegengesetzten Seiten weisen und durch eine vorgegebene Dicke voneinander getrennt sind, und die Scheibe mit bestimmten physikalischen Eigenschaften versehen ist, und wobei das Verfahren folgende Schritte umfaßt:
   Einlegen einer Schicht (11) aus einem fluorierten Harz mit einem Schmelzpunkt unterhalb des Schmelzpunktes der Scheibe zwischen das Substrat und mindestens einen Abschnitt der ersten Fläche der Scheibe;
   Anwenden von induktiv erzeugter Wärme und externem Druck auf die Scheibe (13), das Substrat (5) und das Harz (11), um eine Dichtung und eine Verbindung zwischen einem begrenzten Abschnitt der ersten Fläche der Scheibe und dem Substrat zu erzeugen, indem das Harz und nur ein Teil der Dicke der an den begrenzten Abschnitt der ersten Fläche angrenzenden Scheibe geschmolzen werden, ohne die zweite Fläche während der Herstellung der Verbindung zu schmelzen, indem die Wärme und der externe Druck für kontrollierte Zeitspannen auf vorgegebene Bereiche begrenzt werden, so daß die vorgegebenen physikalischen Eigenschaften der nicht geschmolzenen Abschnitte der Scheibe nicht signifikant verändert werden.

2. Verfahren nach Anspruch 1, dadurch **gekennzeichnet,** daß das Substrat ein Dichtungsgehäuse (5) umfaßt, daß die Scheibe (13) einen Kontaktdichtflächenabschnitt umfaßt, der von dem Gehäuse absteht, und daß das Schmelzen auf einen Bereich beschränkt ist, der von der Kontaktdichtfläche getrennt ist und zwischen dem Gehäuse und der Scheibe liegt.

3. Verfahren nach Anspruch 1 oder 2, dadurch **gekennzeich- net,** daß das fluorierte Harz ein Fluorkohlenstoffharz ist.

4. Verfahren nach Anspruch 3, dadurch **gekennzeichnet,** daß das Fluorkohlenstoffharz ein fluoriertes Äthylenpropylen ist.

5. Verfahren nach Anspruch 3, dadurch **gekennzeichnet,** daß das fluorierte Harz ein Perfluoralkoxyharz ist.

6. Verfahren nach einem der vorhergehenden Ansprüche, dadurch **gekennzeichnet,** daß das Substrat (5) in weniger als 10 Sekunden auf eine mindestens der Schmelztemperatur des Polytetrafluoräthylens entsprechende Temperatur erwärmt wird.

7. Verfahren nach einem der vorhergehenden Ansprüche, dadurch **gekennzeichnet,** daß das Substrat auf eine Temperatur zwischen 327°C und 427°C (621° und 800°F) erwärmt wird.

8. Verfahren nach einem der Ansprüche 1 bis 6, dadurch **gekennzeichnet,** daß das Substrat (5) auf eine Temperatur von ca. 28 bis 50°C (50° bis 90°F) über der Schmelztemperatur von Polytetrafluoräthylen erwärmt wird.

9. Verfahren nach einem der Ansprüche 1 bis 6, dadurch **gekennzeichnet,** daß das Substrat (5) auf eine Temperatur zwischen 366 und 377°C (690 und 710°F) erwärmt wird.

**10.** Verfahren nach Anspruch 8, dadurch **gekennzeichnet,** daß das Substrat (5) auf der genannten Temperatur für bis zu 60 Sekunden gehalten wird.

**11.** Verfahren nach Anspruch 10, dadurch **gekennzeichnet,** daß das Substrat (5) auf der genannten Temperatur für mindestens 10 Sekunden gehalten wird.

**12.** Verfahren nach Anspruch 11, dadurch **gekennzeichnet,** daß das Substrat (5) auf der genannten Temperatur für ca. 15 bis 30 Sekunden gehalten wird.

**13.** Dichtung, umfassend:
eine Scheibe (13), die vorgegebene physikalische Eigenschaften hat, Polytetrafluoräthylen umfaßt und einen Kontaktdichtflächenabschnitt sowie eine erste und eine zweite Fläche hat, die nach entgegengesetzten Seiten weisen und durch eine vorgegebene Dicke von einander getrennt sind, sowie
ein Substrat (5) zum Tragen der Scheibe,
wobei die Dichtung umfaßt:
eine Verbindung und Abdichtung, die zwischen der ersten Fläche der Scheibe (13) und dem Substrat (5) gebildet ist und einen Bereich eines fluorierten, als Klebstoff dienenden Harzes vermischt mit dem genannten Polytetrafluoräthylen umfaßt, wobei der Schmelzpunkt des Klebstoffes niedriger als der Schmelzpunkt der Scheibe ist, wobei die Verbindung und Dichtung durch induktive Erwärmung und Abkühlung des Substrates, des Klebstoffes und des Polytetrafluoräthylens erzeugt wird und wobei die Verbindung sich nur über einen Abschnitt der Dicke der Scheibe erstreckt und von der Kontaktdichtfläche getrennt ist, so daß die vorgegebenen physikalischen Eigenschaften der Scheibe an der Kontaktdichtfläche im wesentlichen von der Herstellung der Verbindung unberührt bleiben.

**14.** Dichtung nach Anspruch 13, dadurch **gekennzeichnet,** daß der Klebstoff ein fluoriertes Äthylenpropylen umfaßt.

**15.** Dichtung nach Anspruch 13, dadurch **gekennzeichnet,** daß der Klebstoff ein Perfluoralkoxyharz umfaßt.

## Revendications

**1.** Procédé pour assembler une plaquette (13) comprenant du polytétrafluoréthylène avec un substrat pouvant entre chauffé par induction (5), ladite plaquette ayant un premier et un deuxième côtés opposés séparés par une épaisseur prédéterminée, et ladite plaquette étant formée avec des propriétés physiques prédéterminées ;
dans lequel ledit procédé comprend
l'interposition d'une couche de résine fluorée (11), ayant un point de fusion inférieur à celui de ladite plaquette, entre ledit substrat et au moins une portion dudit premier côté de ladite plaquette ;
l'application de chaleur produite par induction et d'une pression externe à ladite plaquette (13), audit substrat (5) et à ladite résine (11), afin de former un joint et un assemblage entre une portion limitée dudit premier côté de ladite plaquette et ledit substrat, en faisant fondre rapidement ladite résine et seulement une portion de ladite épaisseur de ladite plaquette adjacente à ladite portion limitée dudit premier côté, sans faire fondre ledit deuxième côté pendant la formation dudit assemblage, en limitant ladite chaleur et ladite pression externe dans des gammes prédéterminées, pendant des périodes de temps contrôlées, de sorte que lesdites propriétés physiques prédéterminées des portions non fondues de ladite plaquette ne soient pas modifiées de manière significative.

**2.** Procédé selon la revendication 1, caractérisé en ce que ledit substrat comprend un boîtier de joint (5), et que ladite plaquette (13) comprend une portion de surface de contact d'étanchéité s'avançant depuis ledit boîtier, et que ladite fusion est limitée à une région séparée de ladite surface de contact d'étanchéité et située entre ledit boîtier et ladite plaquette.

**3.** Procédé selon la revendication 1 ou 2, caractérisé en ce que ladite résine fluorée est une résine au fluorocarbone.

**4.** Procédé selon la revendication 3, caractérisé en ce que ladite résine au fluorocarbone est de l'éthylènepropylène fluoré.

5. Procédé selon la revendication 3, caractérisé en ce que ladite résine au fluorocarbone est une résine d'alkoxyde perfluoré.

6. Procédé selon l'une quelconque des revendications précédentes, caractérisé en ce que ledit substrat (5) est chauffé à une température égale au moins à la température de fusion du polytétrafluoréthylène en moins de 10 secondes.

7. Procédé selon l'une quelconque des revendications précédentes, caractérisé en ce que ledit substrat est chauffé à une température comprise entre 327° C et 427 °C (621° F et 800°F).

8. Procédé selon l'une quelconque des revendications 1 à 6, caractérisé en ce que ledit substrat (5) est chauffé à une température supérieure d'environ 28 à 50° C (50 à 90° F) à la température de fusion du polytétrafluoréthylène.

9. Procédé selon l'une quelconque des revendications 1 à 6, caractérisé en ce que ledit substrat (5) est chauffé à une température comprise entre 366 et 377° C (690 et 710° F).

10. Procédé selon la revendication 8, caractérisé en ce que ledit substrat (5) est maintenu à ladite température pendant une durée maximale de 60 secondes.

11. Procédé selon la revendication 10, caractérisé en ce que ledit substrat (5) est maintenu à ladite température pendant au moins 10 secondes.

12. Procédé selon la revendication 11, caractérisé en ce que ledit substrat est maintenu à ladite température pendant une durée comprise environ entre 15 et 30 secondes.

13. Joint d'étanchéité comprenant :
   une plaquette (13) ayant des propriétés physiques prédéterminées et comprenant du polytétrafluoréthylène, ladite plaquette comprenant une portion de surface de contact d'étanchéité et ayant un premier et un deuxième côtés séparés par une épaisseur prédéterminée ; et
   un substrat (5) pour supporter ladite plaquette ;
   dans lequel ledit joint comprend
   un assemblage et un joint formés entre ledit premier côté de ladite plaquette (13) et ledit substrat (5), ledit assemblage comprenant une région d'adhésif formée de résine fluorée mélangée audit polytétrafluoréthylène, ledit adhésif ayant un point de fusion inférieur au point de fusion de ladite plaquette, ledit assemblage et ledit joint étant formés en chauffant par induction et en refroidissant ledit substrat, ledit adhésif et ledit polytétrafluoréthylène, ledit assemblage s'étendant à travers une portion seulement de ladite épaisseur de ladite plaquette et étant séparé de ladite surface de contact d'étanchéité de sorte que lesdites propriétés physiques prédéterminées de ladite plaquette à ladite surface de contact d'étanchéité ne soient pas sensiblement affectées par la formation dudit assemblage.

14. Joint selon la revendication 13, caractérisé en ce que ledit adhésif comprend de l'éthylène-propylène fluoré.

15. Joint selon la revendication 13, caractérisé en ce que ledit adhésif comprend une résine d'alkoxyde perfluoré.

FIG 1

FIG 1a

FIG 12

FIG 13

FIG 5

5

FIG 6

14

11

5

43 13 5

41

2

FIG 2

FIG 7

13

5

11

2

5

41 13 33

31 43

FIG 11

FIG 8

2

13

5

14

1

FIG 3

FIG 4

FIG 9

FIG 10